# EUROPEAN PATENT SPECIFICATION

(11) **EP 1 847 173 B1**
(45) Date of publication and mention of the grant of the patent: **06.10.2010**
(21) Application number: 07075281.1
(22) Date of filing: 16.04.2007
(51) Int. Cl.: A01K 1/02

(54) **Farrowing device**
Abferkelbucht
Dispositif de mise bas

(30) Priority: 18.04.2006 NL 1031608
(43) Date of publication of application: 24.10.2007
(73) Proprietor: Van Bommel, Wilhelmus Johannes, 5757 PB Liessel (NL)
(72) Inventor: Van Bommel, Wilhelmus Johannes, 5757 PB Liessel (NL)
(74) Representative: Algemeen Octrooi- en Merkenbureau

(56) References cited:
- WO-A-02/30179
- WO-A-86/00192
- GB-A- 1 282 731
- NL-A- 8 502 018

## Description

The invention relates to a farrowing device for a sow with piglets, as described in the preamble of claim 1.

Such farrowing devices with a recessed part in the region where the sow is standing and lying are known, see document NL-A-8502018, WO-A-02/30179 and GB-A-1282731. One such farrowing device, which is known from Dutch patent application No. 8401142, has a completely flat floor. The sow is present in a part of the device that is closed off, for example by means of fencing elements. The piglets can reach a sow lying on the floor through the gap between the fencing and the floor. The piglets can also move freely under the fencing to a part intended for the piglets, which is located beside the fenced-off part.

As soon as the sow takes up a lying position on the flat floor, the piglets will try to locate the sow's teats. The sow lies on its side, with its legs supported on the flat floor. In this position, one row of teats will be positioned comparatively close to the floor, so that it is difficult for the piglets to reach these teats.

The object of the invention is to provide a farrowing device by which it can be ensured in a simple manner that both rows of teats of a lying sow are easy to reach in the same position of the sow.

This object is accomplished with the farrowing device according to claim 1.

When a sow lies on the floor, the sow's trunk will be positioned in the recessed part, so that the sow will lie on its side in a more comfortable and more univocal position, so that both rows of teats will be easy to reach.

This is important in particular because recently developed breeding techniques have led to sows producing increasingly large litters. Because of this, it has become increasingly important that all the teats of a sow can be reached, so that all the piglets can be nursed at the same time.

One embodiment of the farrowing device according to the invention is **characterised in that** the recessed part comprises flat portions extending in a longitudinal direction and a gutter-shaped portion extending between said flat portions.

The flat parts make it possible to realise a smooth connection between the recessed part and the surrounding floor part, so that the presence of sharp edges, on which the sow and also the piglets may hurt themselves, can be avoided in a simple manner.

Another embodiment of the farrowing device according to the invention is **characterised in that** the gutter-shaped part is concave in shape.

Such a concave part forms an adequate and comfortable support for the sow's trunk.

The floor comprises at least one lowered flat part located in line with the recessed part.

The lowered flat part is suitable for supporting the legs of a sow taking up a standing position. For the sow it is more pleasant to stand on a flat part than on a gutter-shaped or concave part. Once the sow takes up a lying position, the part of the trunk near the legs rests on the lowered, flat part and the sow's legs rest on the higher floor part. As a result, the sow can stay on its side in a comfortable position. In this position, the sow's teats are easy to reach.

Another embodiment of the farrowing device according to the invention is **characterised in that** the lowered, flat part comprises a grid.

Via said grid, the sow's excrements can be easily discharged.

Yet another embodiment of the farrowing device according to the invention is **characterised in that** the farrowing device further comprises a floor part for supporting the piglets.

Said floor part may lie in substantially the same plane as the floor comprising the recessed part, so that the piglets can reach the sow's teats without difficulty.

Yet another embodiment of the farrowing device according to the invention is **characterised in that** a gutter is positioned between the floor part and the recessed part of the floor, the longitudinal direction of which gutter extends parallel to the longitudinal direction of the recessed part.

Piglets that wish to reach the row of teats nearest the floor can positioned their front legs in the gutter, in which position the teats are easy to reach. If the teats can be reached but are positioned relatively close to the floor, the piglets will attempt to position their front legs underneath their trunks, in which position the front legs come to abut against the floor. This involves the risk of the piglets' front legs being injured. Because the piglets can now position their front legs in the gutter, they no longer need to fold their front legs underneath them. This has a positive effect on the piglets' health.

Yet another embodiment of the farrowing device according to the invention is **characterised in that** the gutter can be moved in a direction towards the recessed part and in a direction away therefrom.

In this way it is possible to adjust the distance between the gutter and the sow in dependence on the sow's size and the desired spacing between the sow's teats and the gutter. This, too, helps to make it easier for the piglets to reach the sow's teats.

The invention will now be explained in more detail with reference to the drawings, in which:
Figure 1 shows a part of a farrowing device according to the invention partially in plan view and partially in front view;
Figure 2a-c are cross-sectional views of the farrowing device according to the invention in the direction indicated by the arrows IIA-IIA, IIB-IIB and IIC-IIC, respectively, in figure 1; and

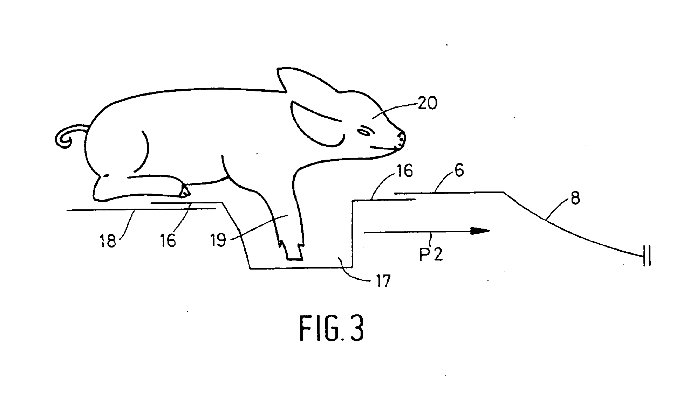

Figure 3 is a detail view of the farrowing device shown in figure 1.

Like parts are indicated by the same numerals in the figures.

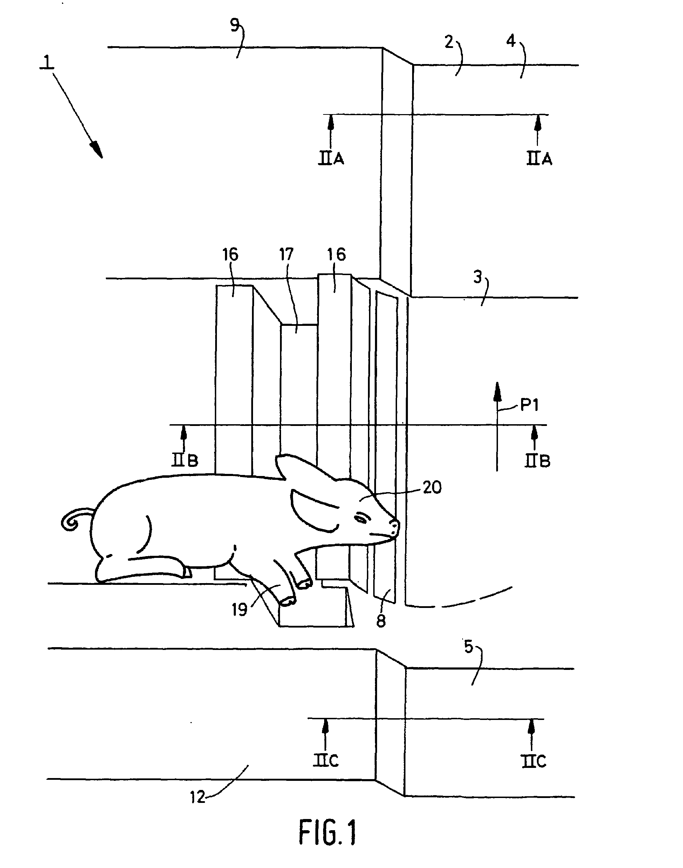

Figure 1 shows a farrowing device 1 according to the invention, which comprises a floor 2 that extends in a direction indicated by the arrow P1 and in a direction transversely thereto. The farrowing device 1 comprises one or more fencing elements (not shown), which restrict a sow's freedom of movement to a specific area of the floor 2. Such fencing elements are known per se and will not be explained in more detail herein, therefore.

The floor 2 of the farrowing device 1 according to the invention comprises a recessed part 3 and lowered, flat parts 4, 5 located on either side of the recessed part 3.

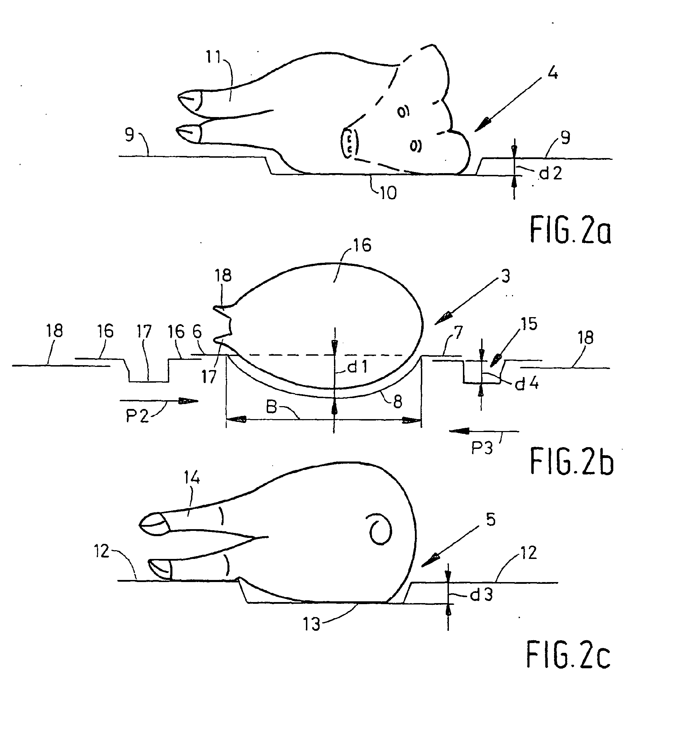

As figures 2a-2c clearly show, the recessed part 3 comprises two flat portions 6, 7 and a gutter-shaped portion 8 extending therebetween. The gutter-shaped portion 8 is concave in shape, preferably having a width B of 40-100 cm and a depth d1 of, preferably, 1-10 cm. Said dimensions depend on the average dimension of the species and breed of the sow to be supported by the floor 2 of the farrowing device 1. The lowered flat part 4 comprises portions 9 lying in the same plane as the flat portions 6, 7 and a portion 10 located therebetween, which portion 10 lies a depth d2 lower than the portions 9. Said depth d2 is preferably the same as the depth d1. The width of the flat portion 10 is such that a sow can easily stand thereon with its front legs 11.

The lowered flat part 5 comprises two portions 12 lying in the same plane as the portions 6, 7, 9, and a lowered flat portion 13 located therebetween. The lowered flat portion 13 lies a depth d3 lower than the portions 12. Said depth d3 is preferably the same as the depth d1. The lowered flat part 4 and the lowered flat part 5 may be configured identically. The width of the flat portion 13 is such that the sow can easily stand thereon with its hind legs 14.

The farrowing device 1 is provided with a gutter-shaped element 15 on either side of the recessed part 3, which element comprises two strips 16 extending parallel to the portions 6, 7 as well as a gutter 17 therebetween. The gutter 17 extends in the direction indicated by the arrow P1. One strip 16 is positioned under the portion 6, 7 of the recessed part 3, whilst another strip 16 is positioned on top of an adjacent floor portion 18. The height of said floor portion 18 is substantially the same as the height of the portion 6, 7.

The gutter-shaped elements 15 are each movable in the directions indicated by the arrows P2 and P3, making it possible to position the gutter-shaped element 15 a desired distance from the gutter-shaped portion 8. The gutter 17 has a depth d4 of, for example, 1-10 cm.

The farrowing device 1 is used in the following manner. A sow is placed on the parts 3, 4, 5 of the floor 2, being restricted in its movements by fencing elements which are known per se. Piglets 20 can move freely on the floor 2. When a sow lies down on the floor 2, its trunk 16 will be positioned in the gutter-shaped portion 8 of the recessed part 3, with its rows of teats 17, 18 extending above the plate portion 6 or 7. In this position, the sow lies fully on its side. The sow's front legs 11 extend over and are supported on the portion 9, whilst the hind legs extend over and are supported on the portion 12 of the floor 18. Since the side of the sow's trunk 16 lies lower than the surrounding floor 2 and the sow's legs 11, 14, the sow lies comfortably on its side. A piglet that wishes to reach the lower row of teats 17 places its front legs 19 in the gutter 17, thereby positioning its head 20 relatively close to the portion 6 or 7, so that it can easily take a teat 17. The piglets can also reach the higher row of teats 18 either by standing on the part 6, 7 or by standing on the piglets 20 nursing from the teats 17. All teats 17, 18 are easy to reach in this manner.

It is also possible to position the floor parts 3, 4, 5 higher than the floor portion 18.

It is also possible not to use the gutter-shaped elements 15. Furthermore it is possible to provide the gutter-shaped part 8 with cooling or heating elements. It is also possible to configure the portions 10, 13 to have the same shape as the portion 8.

## Claims

1. A farrowing device (1) for a sow with piglets, which farrowing device (1) comprises at least a floor (2) for supporting the sow, wherein the floor (2) comprises a recessed part (3) for supporting the sow's trunk, **characterised in that** the floor (2) comprises at least one lowered flat part (4, 5) located in line with the recessed part (3).

2. A farrowing device according to claim 1, **characterised in that** the recessed part (3) comprises flat portions (6, 7) extending in a longitudinal direction and a gutter-shaped portion (8) extending between said flat portions (6, 7).

3. A farrowing device according to claim 2, **characterised in that** the gutter-shaped part (8) is concave in shape.

4. A farrowing device according to claim 1, **characterised in that** the lowered, flat part (4, 5) comprises a grid.

5. A farrowing device according to any one of the preceding claims, **characterised in that** the farrowing device (1) further comprises a floor part (5) for supporting the piglets.

6. A farrowing device according to claim 5, **characterised in that** a gutter (17) is positioned between the floor part (5) and the recessed part (3) of the floor (2), the longitudinal direction of which gutter (17) extends parallel to the longitudinal direction of the recessed part (3).

7. A farrowing device according to claim 6, **characterised in that** the gutter (17) can be moved in a direction towards the recessed part (3) and in a direction away therefrom.

## Patentansprüche

1. Abferkelvorrichtung (1) für eine Sau mit Ferkeln, wobei die Abferkelvorrichtung (1) mindestens einen Boden (2) zum Aufnehmen der Sau aufweist und der Boden (2) einen ausgesparten Teil (3) zum Halten des Rumpfes der Sau aufweist, **dadurch gekennzeichnet, dass** der Boden (2) mindestens einen tiefer liegenden, flachen Teil (4, 5) aufweist, der mit dem ausgesparten Teil (3) in einer Reihe angeordnet ist.

2. Abferkelvorrichtung nach Anspruch 1, **dadurch gekennzeichnet, dass** der ausgesparte Teil (3) flache Abschnitte (6, 7), die sich in Längsrichtung erstrecken, und einen rinnenförmigen Abschnitt (8), der sich zwischen den flachen Abschnitten (6, 7) erstreckt, aufweist.

3. Abferkelvorrichtung nach Anspruch 2, **dadurch gekennzeichnet, dass** der rinnenförmige Abschnitt (8) eine konkave Form aufweist.

4. Abferkelvorrichtung nach Anspruch 1, **dadurch gekennzeichnet, dass** der tiefer liegende, flache Teil (4, 5) ein Gitter aufweist.

5. Abferkelvorrichtung nach einem der vorhergehenden Ansprüche, **dadurch gekennzeichnet, dass** die Abferkelvorrichtung (1) ferner einen Bodenteil (5) zum Aufnehmen der Ferkel aufweist.

6. Abferkelvorrichtung nach Anspruch 5, **dadurch gekennzeichnet, dass** eine Rinne (17) zwischen dem Bodenteil (5) und dem ausgesparten Teil (3) des Bodens (2) angeordnet ist, wobei die Längsrichtung der Rinne (17) parallel zur Längsrichtung des ausgesparten Teils (3) verläuft.

7. Abferkelvorrichtung nach Anspruch 6, **dadurch gekennzeichnet, dass** sich die Rinne (17) in eine Richtung zum ausgesparten Teil (3) hin und in eine Richtung weg von diesem bewegen kann.

## Revendications

1. Dispositif de mise bas (1) pour une truie avec des porcelets, lequel dispositif de mise bas (1) comprend au moins un plancher (2) pour supporter la truie, dans lequel le plancher (2) comprend une partie évidée (3) pour supporter le tronc de la truie, **caractérisé en ce que** le plancher (2) comprend au moins une partie plate abaissée (4, 5) alignée avec la partie évidée (3).

2. Dispositif de mise bas selon la revendication 1, **caractérisé en ce que** la partie évidée (3) comprend des parties plates (6, 7) s'étendant dans une direction longitudinale et une partie en forme de gouttière (8) s'étendant entre lesdites parties plates (6, 7).

3. Dispositif de mise bas selon la revendication 2, **caractérisé en ce que** la partie de gouttière (8) a une forme concave.

4. Dispositif de mise bas selon la revendication 1, **caractérisé en ce que** la partie plate abaissée (4, 5) comprend une grille.

5. Dispositif de mise bas selon l'une quelconque des revendications précédentes, **caractérisé en ce que** le dispositif de mise bas (1) comprend en outre une partie de plancher (5) pour supporter les porcelets.

6. Dispositif de mise bas selon la revendication 5, **caractérisé en ce qu'**une gouttière (17) est positionnée entre la partie de plancher (5) et la partie évidée (3) du plancher (2), dont la direction longitudinale de la gouttière (17) s'étend parallèlement à la direction longitudinale de la partie évidée (3).

7. Dispositif de mise bas selon la revendication 6, **caractérisé en ce que** la gouttière (17) peut être déplacée dans une direction allant vers la partie évidée (3) et dans une direction à distance de celle-ci.
